# EUROPÄISCHE PATENTSCHRIFT

(11) **EP 0 630 358 B1**
(45) Veröffentlichungstag und Bekanntmachung des Hinweises auf die Patenterteilung: **15.05.1996**
(21) Anmeldenummer: 93905071.2
(22) Anmeldetag: 08.03.1993
(51) Int. Cl.: C04B 20/00, C04B 28/26, C04B 28/00

(54) **ANORGANISCHE MASSE, DARAUS HERGESTELLTE BESCHICHTUNGEN, FORMKÖRPER UND VERFAHREN ZU IHRER HERSTELLUNG**
INORGANIC MASSE, COATINGS PRODUCED THEREFROM, FORMED BODIES AND PROCESS FOR PRODUCING THE SAME
MASSE INORGANIQUE, REVETEMENTS REALISES A PARTIR DE LADITE MASSE, CORPS FA ONNES ET LEUR PROCEDE DE FABRICATION

(30) Priorität: 09.03.1992 AT 449/92
(43) Veröffentlichungstag der Anmeldung: 28.12.1994
(73) Patentinhaber: MELCHER, Gerhard, A-1100 Wien 10 (AT)
(72) Erfinder: MELCHER, Gerhard, A-1100 Wien 10 (AT)
(86) Internationale Anmeldenummer: AT9300039
(87) Internationale Veröffentlichungsnummer: WO9317978

(56) Entgegenhaltungen:
- EP-A- 0 065 410
- WO-A-91/08989
- BE-A- 898 879
- FR-A- 938 329
- FR-A- 1 472 052
- FR-A- 2 449 661
- GB-A- 437 719

## Beschreibung

### 1) Einsatzgebiet der Erfindung

Temperaturbeständige anorganische Materialien, wie sie im Ofenbau Verwendung finden, sind hauptsächlich keramische Bausteine, die mit Hilfe von Kitten zu Ausmauerungen verbunden werden. Alumosilikatfasern werden für hochtemperaturfeste Leichtbauteile oder analog zu Glas- und Stahlfasern als Verstärkungselemente zur Erhöhung der mechanischen Festigkeit von thermisch beanspruchten anorganischen Formkörpern eingesetzt. Für großflächige temperaturbeständige Formkörper, insbesondere Platten, wurden auch Asbestfasern in Verbindung mit Zement verwendet. Neben den relativ hohen Kosten und den generellen gesundheitlichen Bedenken beim Einsatz von mineralischen Fasern ist oft auch das Langzeitverhalten derartiger Zement/Faserverbunde, etwa von Glasfaserbeton, bei Temperaturbelastung problematisch. Das Ziel der Erfindung ist es daher, ein anorganisches, umweltfreundliches Beschichtungs- oder Plattenmaterial zu beschreiben, welches für erhöhte Temperaturbeanspruchungen, wie sie beispielsweise bei Öfen auftreten, geeignet ist. Eine weitere Forderung ist, daß hohe mechanische Festigkeiten ähnlich denen von faserverstärkten anorganischen Baustoffen erreicht werden sollen.

### 2) Allgemeine Beschreibung der Erfindung

Schiefergesteine besitzen normal zu ihrer Schichtstruktur im Vergleich zu anderen Gesteinen hohe Biegefestigkeiten. Es ist derzeit nicht Stand der Technik, beim Einsatz dieser Materialien eine Übertragung dieser positiven mechanischen Eigenschaften auf den gesamten Formkörper zu erreichen und sie gleichsam als Verstärkungsmaterialien analog zu den Fasern einzusetzen. Plättchenförmige Füllstoffe, wie etwa Glimmer oder Kaolin, werden hauptsächlich als Mehl mit Teilchengrößen, die in der Regel unter 100 µ liegen, eingesetzt. Sie werden zum Beispiel für Beschichtungen verwendet wo sie aufgrund ihrer Schichtstruktur bestimmte Eigenschaften der Formulierungen, wie deren Haftung, Elastizität und Korrosionsbeständigkeit, die Wetterbeständigkeit und die elektrischen Eigenschaften verbessern können. Grobe plättchenförmige Zuschlagsstoffe werden wegen ihrer Sperrigkeit in den Verarbeitungsprozessen gemieden, da sie zum Beispiel bei Beton unter normalen Produktionsbedingungen Fehlstellen (Lufteinschlüsse) und erhöhten Zementbedarf bedingen. Es zeigt sich nun, daß gemäß der Erfindung bei den eingesetzten schieferförmigen Gesteinen insbesondere ihre positiven mechanischen Eigenschaften in einem hohen Ausmaß auf die Formkörper übertragen werden. Der gemäß der erfindungsgemäßen Formmasse in kompakter, grober Form eingesetzte Schiefer führt zu einer hohen. Biegefestigkeit der Formkörper. Wird der Schiefer als Splitt in kubischer Form verwendet, so können sie bei entsprechender Bindung in der Matrix ihre heterotropen mechanischen Eigenschaften ihrer statistischen räumlichen Orientierung entsprechend in den Gesamtverbund einbringen. Besonders günstig ist jedoch eine plättchenförmige Struktur des Gesteins, wobei eine überwiegend planparallele Orientierung der Plättchen im Formkörper anzustreben ist.

Gegenstand der Erfindung sind ferner ein Verfahren zur Herstellung der Formmasse bzw. hochtemperaturbeständige Beschichtungen auf Schieferbasis.

Als Bindemittel können die üblichen anorganischen Systeme dienen, die eine entsprechende Temperaturfestigkeit besitzen. So sind zum Beispiel Alkalisilikate (Natrium- oder Kaliumwasserglas) oder Bindemittel auf Aluminiumphosphat- oder Borphosphatbasis oder Zement anwendbar.

Grobe plättchenförmige anorganische Füllstoffe mit definierter Größenvertellung sind sehr einfach, in großen Mengen aus natürlich vorkommenden Gesteinen, wie sie die Familie der Grünschiefer und der Tonschiefer darstellen, durch Zerkleinerung und Siebung zu erhalten. Die Grünschiefer stellen als Prasinit eine Mineralkombination von Albit, Epidot (Epidot-Zoisit), Klinozoisit, Chlorit mit natriumhaltiger Hornblende und Biotit (entsprechend einer Einteilung der "Einführung in die Gesteinskunde" von H. Leitmeier, Springer Verlag Wien 1950) dar. Die Tonschiefer sind Übergangsgesteine von geschichteten Tonen zu den Phylliten. Die geschichtete Struktur dieser Gesteine bedingt eine relativ hohe Biegefestigkeit quer zur Schichtebene. Die thermische Beständigkeit dieser Gesteine wird in der Regel durch Blähtemperaturen von über 1200 °C gekennzeichnet.

Dabei kommen vorteilhaft plättchenförmige Partikel mit einer Schichtdicke von 0,5 bis 2 mm und mit Längendimensionen in der Plättchenebene zwischen 2 oder 3 und 10 mm zum Einsatz. Es können jedoch auch dünnere Plättchen der Dicke 0,1 bis 0,5 mm mit einem Plättchendurchmesser von 2 oder 3 bis 6 mm verwendet werden, die sich zum Beispiel in raumtemperaturhärtenden Mischungen für Brandschutzbeschichtungen, die fallweise auf stehende Flächen aufgespritzt werden, als günstig erweisen.

Als Feinanteile sind erfindungsgemäß sehr unterschiedliche Füllstoffe in gemahlener oder zerteilter Form, beispielsweise Gesteinsmehle, Schiefermehl, Basalte, Tone, Feldspäte, Kreide, Glasmehl, Quarzsand oder Quarzmehl, Bauxitmehl, Tonerdehydrat, Aschen, Schlacken, usw. von unterschiedlichen Korngrößen, vorzugsweise 90% unter 100µ, oder leichte Füllstoffe wie Bimsmehl, Perlite, Blähton, Hyperlite usw. einzusetzen. Diese Füllstoffe können weiters in der Lage sein mit den Bindemitteln zu reagieren und damit wesentlich zu den Eigenschaften der Formmasse und der Formkörper beitragen.

Zur Optimierung besonderer Eigenschaften ist es fallweise günstig, zusätzlich zu den Plättchen Fasermaterialien zuzusetzen. So können etwa organische Fasern, beispielsweise Polyamidfasern, oder auch anorganische Fasern, beispielsweise Glasfasern, zugemischt werden, um wenn notwendig die Grünfestigkeit von Mischungen zu erhöhen. Dies kann insbesonders beim Wickelprozeß eines Rohres mit einer nach dem hier beschriebenen Patentanspruch hergestellten, eventuell vorgelierten Formmasse von Vorteil sein.

Der überwiegend anorganischen Masse können auch organische Stoffe zugesetzt werden. So können organische Netzmittel, Elastifizierungsmittel (Acrylatdispersionen) und ähnliche Zusatzstoffe, wie sie beispielsweise bei Beton üblich sind, verwendet werden. Auch eine Verstärkung der Hydrophobie oder der Wasserfestigkeit der Formkörper etwa durch den Zusatz von Harzen ist möglich.

Mit Hilfe dieser Rohstoffe, vor allem durch den Einsatz von geschichteten Gesteinen, wie zum Beispiel von orientierten Schieferplättchen, ist es überraschenderweise möglich, in Kombination mit bestimmten Verfahrensschritten die Biegefestigkeiten von faserverstärkten Verbundwerkstoffen zu erreichen.

Die Orientierung der relativ großen Plättchen kann auf vielfältige Art und Weise erfolgen. So können die Formmassen schrittweise in Schichten aufgebracht werden, wobei es günstig ist, die Schichtdicken im Vergleich zum Plättchendurchmesser gering zu wählen. Die Plättchen können schichtweise durch einen Streuprozeß oder durch Aufstreichen auf ebene Flächen, in eventueller Kombination mit einem Rüttelvorgang, einem Stampfprozeß oder einem Verdichtungsprozeß durch Vibration aufgebracht und orientiert werden. Eine Härtungs- oder Gelierungsphase kann zwischen jedem einzelnen Auftragsschritt vorteilhaft sein. Extrusion der Formmasse durch eine Düse führt ebenfalls zur Ausrichtung der Plättchen.

Härtungstemperatur und Härtungszeit sind von der Zusammensetzung der Formmasse, von Art und Menge der Bindemittel, der Füllstoffe und vom Feuchtegehalt abhängig. Während Zement hydraulisch bei Raumtemperatur härtet, werden Wasserglas und Aluminiumphosphat in der Regel mit Härtungstemperaturen zwischen 50°C und maximal 200°C ausgehärtet. Für den vorangehenden Vorgang des Anhärtens und Trocknens soll eine Temperatur eingehalten werden, bei der sich kein Wasserdampf bildet.

Will man kompakte Formkörper erzeugen, so sind die Mengenverhältnisse von Bindemittel, Feinanteil und Plättchenanteil unter Berücksichtigung von Plättchen- und Korngrößenverteilungsspektrum aufeinander abzustimmen, wobei in der Regel umso mehr Feinanteil notwendig ist, je gröber und dicker die Plättchenstrukturen sind. Es empfiehlt sich die Mengenverhältnisse der einzelnen Füllstoffe dem jeweiligen Gesteinsmaterial anzupassen, da die Gesteinsplättchen in ihren Dimensionen und mechanischen Eigenschaften starken Schwankungen unterworfen sein können. Weiters ist für die Herstellung kompakter Formkörper eine Aushärtung unter Druck in einer Presse günstig.

Ist beabsichtigt Formmassen und Formkörper mit niedrigen Dichten, also mit Hohlräumen zwischen den Plättchen herzustellen, so kann man dies entweder durch die oben angeführten Mengenverhältnisse oder bei wäßrigen Bindemittelsystemen, die nachträglich getrocknet werden, durch eine Veränderung des Wassergehaltes und des Trocknungsprozesses in Abstimmung mit der Härtung beeinflussen. Weiters ist es möglich Leichtfüllstoffe mit Hohlräumen einzusetzen, wobei die Dichte durch diese Füllstoffe reduziert und die Festigkeit durch die Plättchen gesteigert wird. Auch können in der Wärme gasabspaltende Treibmittel zugesetzt werden, die die in einer Form befindliche Masse schaumartig auftreiben. Weiters kann als Verbundwerkstoff ein schichtweiser Aufbau der Platten mit orientierten Schichtstrukturen an den Außenseiten der Formkörper und mit Innenschichten geringer Dichten erzeugt werden, um bei niedrigen mittleren Dichten hohe Festigkeiten zu erzielen.

Die Formkörper sind bearbeitbar. Sie können gesägt und gebohrt werden und es können Gewinde eingeschnitten werden. Auch die Oberfläche kann nachträglich bearbeitet werden. Die verstarkende Wirkung der Plättchen unterliegt den gleichen, auch für die Fasern zutreffenden Gesetzmäßigkeiten, die für die Einbettung in die Matrix gültig sind. So ist der Elastizitätsmodul der Matrix im Vergleich zum Elastizitätsmodul der Plättchen und die Bindung der Plättchenoberfläche an die betreffende Matrix von Bedeutung. Das heißt, daß die erzielbaren Festigkeiten naturgemäß auch von der Matrix abhängig sind. Die Temperaturbeständigkeit der Formkörper liegt in der Regel je nach Formmasse bei 1000°C bis 1200°C. Die Neigung zur Rißbildung ist aufgrund der Schichtstruktur selbst bei extrem raschem Temperaturwechsel sehr gering.

Die Formkörper können zum Teil oder ganz aus der Formmasse bestehen. Sie können zum Beispiel eingelegte Verstärkungsmaterialien, wie etwa Eisengitter, enthalten, die zusätzliche Festigkeiten geben, wie es etwa auch für einen möglichen Einsatz als Dachdeckungs-, Verkleidungs- und Fassadenmaterialien günstig sein kann. Oder sie können auf Unterlagen, etwa als Brandschutz, aufgetragen oder als Teile eines Verbundwerkstoffes mit anderen Formkörpern verbunden sein.

Da es sich bei Schiefer um ein Naturprodukt handelt, dessen Eigenschaften selbst innerhalb einer Lagerstätte starken Schwankungen unterworfen sein können, wurden in den nachfolgenden Beispielen zwei Typen an Schiefer verwendet.
A) Grünschiefer mit Biegefestigkeit 30 - 50 N/mm² in Plättchenform mit einer Dicke: 0,2-2 mm und einem Durchmesser: 3 - 8 mm
B) Tonschiefer mit Biegefestigkeit 70 - 90 N/mm² in Platten von 10 bis 20 cm Durchmesser und Dicken zwischen 1 und 4 mm.

Als Füllstoffe und Bindemittel wurden verwendet:
von Fa. Henkel: Natronwasserglas 50%ig, 40%ig, getrocknet (82%ig)
Fa.Chemische Fabrik Budenheim: Fabutit 753, Fabutit 748, Aluminiummonophosphatlösung (Fabutit 705), Borphosphatmonohydrat
Fa. Frix: Bauxitmehl (DIN 70) Fa. Perlite Ges.m.b.H.: Superlite P

### 3) Beispiele

Die folgenden Beispiele sollen die vorliegende Erfindung näher erläutern, ohne daß diese jedoch hierauf beschränkt sein soll.
A) Die Beispiele 1 bis 6 zeigen bei Verwendung von Wasserglas als Bindemittel die mechanischen Eigenschaften der Formkörper aus Quarzkies, Schiefersplitt und Schieferplättchen im Vergleich, wobei der Einfluß der Plättchenorientierung und des Druckes aufgezeigt wird
   **Beispiel 1:** 400 g Quarzkies der Körnung 4 bis 8 mm wurden mit 125 g Bauxitmehl, 125 g 50%igem Wasserglas und 15 g Fabutit 748 innig vermischt und zu Probekörpern von 50 mm Breite und 20 mm Höhe geformt. Die Probekörper wurden drei Tage bei Raumtemperatur härten gelassen. Eine Trocknungsphase mit langsamem Temperaturanstieg von 40°C auf 90°C innerhalb von 24 Stunden folgte und anschließend wurde 6 Stunden auf 110°C gehalten und danach innerhalb von 2 Stunden auf 200°C erwärmt. Die Biegebruchfestigkeit der Probekörper war 10,2 N/mm².
   **Beispiel 2:** 400 g Grünschiefersplitt der Körnung 3 bis 8mm (Vergleichsbeispiel 2b: 400 g Grünschiefersplitt von der Körnung 8 bis 20 mm) wurden analog zu Beispiel 1 zu Probekörpern mit gleichen Dimensionen verarbeitet und ausgehärtet. Als Biegebruchfestigkeit der Probekörper wurden 16,9 N/mm² (Vergleichsbeispiel 2b: 15,6 N/mm²) erhalten.
   **Beispiel 3:** In eine Mischung aus 150 g Bauxitmehl mit 200 g 40%igem Natronwasserglas und 15 g Fabutit 748 wurden unter Vibration 550 g Grünschieferplättchen (Typ A) eingebracht, die überwiegend stehend, also normal zur Plattenoberfläche angeordnet waren. Eine Härtung analog Beispiel 1 ergab eine Biegefestigkeit von 12 N/mm².
   **Beispiel 4:** Ein Probekörper wurde analog Beispiel 3 hergestellt, wobei jedoch durch einen viermaligen Auftrag der Masse in 5 mm dicken Schichten mit nachfolgenden Stampfprozessen und einer Verfestigung der Schichten durch Erwärmung eine zur Probenoberfläche planparallele Plättchenorientierung erzielt wurde. Der Probekörper hatte eine Biegebruchfestigkeit von 21 N/mm².
   **Beispiel 5:** 200 g Bauxitmehl und wurden mit 175 g 50%iger Natriumwasserglaslösung in einem Schnellmischer bei einer Drehzahl von etwa 600 U/min versetzt und während der Mischung 15 Minuten bei 60°C bis 70°C auf eine Feuchte von 18,7 % getrocknet. Danach wurden 550 g Grünschieferplättchen (Typ A) eingemischt, wodurch eine Gesamtfeuchte von 5,5% erhalten wurde. Die streufähige Mischung wurde durch Aufstreichen mit einer Spachtel zu einem Formkörper mit planparalleler Plättchenorientierung geformt und bei 5 bar verpreßt. Der Körper hatte eine Biegebruchfestigkeit von 28 N/mm².
   **Beispiel 6:** Aus 400 g 1 bis 3 mm dicken Tonschieferplatten (Typ B), die auf die Prüfkörperdimensionen von 50 mm Breite und 200 mm Länge zugeschnitten waren, wurde mit einer Masse aus 50 g Bauxitmehl, 50 g 50%igem Natriumwasserglas und 7,5 g Fabutit 748 schichtweise ein Formkörper von 20 mm Höhe gebildet. Der Formkörper wurde unter einem Druck von 5 bar nach einer 15 minütigen Aufheizphase bei einer Temperatur von 150°C 30 Minuten gehärtet und unter Druck abkühlen gelassen. Der Probekörper hatte eine Biegebruchfestigkeit von 30,4 N/mm².
B) Aluminiumphosphat/Borphosphat als Bindemittel
   **Beispiel 7:** Aus 400 g 1 bis 3 mm dicken Tonschieferplatten (Typ B), die auf die Prüfkörperdimensionen von 50 mm Breite und 200 mm Länge zugeschnitten waren, (Vergleichsbeispiel 7b: 400 g Schotter von der Körnung 3 bis 8 mm) wurde mit einer Masse aus 30 g Bauxit, 10 g 50%iger Aluminiummonophosphatlösung und 5 g Fabutit 753 schichtweise ein Formkörper von 20 mm Höhe gebildet. Der Formkörper wurde 30 Minuten unter einem Druck von 5 bar nach einer 15 minütigen Aufheizphase bei einer Temperatur von 150°C gehärtet und unter Druck abkühlen gelassen. Der Probekörper hatte eine Biegebruchfestigkeit von 16,3 N/mm². (Vergleichsbeispiel 7b gab eine Biegebruchfestigkeit von 1,5 N/mm².)
   **Beispiel 8:** 400 g Grünschieferplättchen (Typ A) wurden mit 150 g Bauxitmehl, 50 g Aluminiummonophosphatlösung, 25 g Borphosphatmonohydrat und 10 g Fabutit 753 innig vermischt und zu einem Probekörper mit planparalleler Plättchenorientierung geformt. Die Aushärtung erfolgte in 30 Minuten unter einem Druck von 5 bar bei 150 °C. Der Probekörper besaß eine Biegebruchfestigkeit von 9,6 N/mm².
C) Zement als Bindemittel
   **Beispiel 9:** Ein Leichtbetonprüfkörper wurde aus 400 g Grünschieferplättchen (Typ A) (Vergleichsbeispiel 9b: 400 g Quarzkies der Körnung 4 bis 8 mm) mit 200g Zement 375, 25 g Superlite P und 145 g Wasser nach innigem Vermischen geformt und die Festig-keitswerte nach einer Woche Lagerung bei Raumtemperatur bestimmt. Der erhaltene Probekörper hatte eine Biegebruchfestigkeit von 2,8 N/mm² bei einer Dichte von 1,52 g/cm³. (Vergleichsbeispiel 9b) gab eine Biegebruchfestigkeit von 1,3 N/mm² bei einer Dichte von 1,48 g/cm³.)
   Diese Versuche zeigen, daß bei dem Einsatz von Zement und Leichtfüllstoffen eine Erhöhung der Biegebruchfestigkeit durch Schieferzusatz erreicht werden kann.
D) Beschichtungsbeispiel
   **Beispiel 10:** Ein stehendes Eisenblech wurde mit einer Kaliwasserglasschlempe vorgestrichen. Auf diese Fläche wurde mit einer Spachtel eine Schicht von 3 mm Dicke der nachfolgend beschriebenen Masse durch zweimaligen Auftrag aufgebracht. Die Masse bestand aus 44 % Schieferplättchen der Dicke 0,1 bis 1mm und von einem Plättchendurchmesser von 2 bis 6 mm, 32 % Bauxitmehl und 22 % einer 40 %igen Natriumwasserglaslösung sowie 2 % eines Wasserglashärters Fabutit 748. Zwischen den einzelnen Aufträgen wurde mit heißer Luft getrocknet. Die aufgetragene Schicht war durch ausgezeichnete Haftung und Temperaturbeständigkeit gekennzeichnet.

Diese Beispiele zeigen den positiven Einfluß von geschichteten Gesteinen, insbesondere von planparallel orientierten Plättchen, auf die mechanischen Eigenschaften der Formkörper in Abhängigkeit von den Bindemitteln und Füllstoffen und den verfahrenstechnischen Möglichkeiten. Aufgrund des schichtweisen Aufbaues der Formkörper durch Plättchenstrukturen ist neben der Temperaturbeständigkeit auch die Wechseltemperaturbeständigkeit der Formkörper ausgezeichnet.

## Patentansprüche

1. Härtbare Formmasse aus überwiegend anorganischen Bestandteilen, dadurch gekennzeichnet, daß die Formmasse als Komponenten enthält:
(A) kompakte Körper oder Partikel aus Schiefer und/oder schiefrigem Gestein, von einer Dicke quer zur Gesteinsschicht von 0,1 mm bis 20 mm und einer maximalen Länge von 300 mm und einer minimalen Breite von 2 mm, vorzugsweise 3 mm in der Schichtebene
(B) einen günstigerweise kubischen, fallweise plättchenförmigen Füllstoff mit der maximalen Korngröße von 8 mm, der jedoch bevorzugt einen Feinanteil von über 70 Gew.% mit einem Korndurchmesser unter 0,3 mm enthält,
(C) ein anorganisches Bindemittel mit Ausnahme eines geschmolzenen Bindemittels, fallweise mit einer härtenden Substanz und
(D) gegebenenfalls einen bei überwiegend anorganischen Formmassen üblichen Hilfsstoff und/oder Zusatzstoff anorganischer oder organischer Natur.

2. Formmasse nach Anspruch 1, dadurch gekennzeichnet, daß Komponente (A) aus Grünschiefer besteht.

3. Formmasse nach Anspruch 1, dadurch gekennzeichnet, daß Komponente (A) aus Tonschiefer besteht.

4. Formmasse nach Anspruch 1 bis 3, dadurch gekennzeichnet, daß der Gehalt der Komponente (A) 10 bis 90 Gew.% der Formmasse ist.

5. Formmasse nach Anspruch 1 bis 4, dadurch gekennzeichnet, daß der Gehalt der Komponente (B) 3 bis 75 Gew.% (bevorzugt 5 bis 40 Gew.%) der Formmasse ist.

6. Formmasse nach Anspruch 1 bis 5, dadurch gekennzeichnet, daß der Gehalt der Komponente (C) 5 bis 40 Gew.% der Formmasse ist.

7. Formmasse nach einem der Ansprüche 1 bis 6, dadurch gekennzeichnet, daß Komponente (A) in Plättchenform, vorteilsweise mit einem Achsenverhältnis von Plättchendicke : Plättchenlänge : Plättchenbreite = 1 : (3 - 100) : (2 - 100) eingesetzt wird und die Plättchendicke dabei 0,1 bis 10 mm, bevorzugt 0,5 bis 3 mm beträgt und der Bereich der Plättchenlänge und Plättchenbreite zwischen 2 mm, vorteilsweise 3 mm, und 15 mm liegt.

8. Formmasse nach einem der Ansprüche 1 bis 7, dadurch gekennzeichnet, daß als Komponente (B) Quarzmehl, Glasmehl, Kaolin, Magnesit, Kreide, Schiefermehl, Bauxitmehl, Quarzsand, Aschen, Schlacken und/oder geblähte Leichtfüllstoffe, wie Perlite, Hyperlite, Blähton, Bimsmehl, Flugaschen, usw. alleine oder in Kombination verwendet werden.

9. Formmasse nach einem der Ansprüche 1 bis 8, dadurch gekennzeichnet, daß als Komponente (C), eine wäßrige Alkaliwasserglaslösung aus Natrium- oder Kaliumwasserglas von einem Festkörper 30 bis 60 % oder ein getrocknetes Alkalisilikat in Pulverform von 80 bis 85 % Festkörper oder ein Alkalisilikathydrat oder eine Kombination aus Alkaliwasserglaslösung und/oder Alkalisilikatpulver und/oder Alkalisilikathydrat eingesetzt wird.

10. Formmasse nach einem der Ansprüche 1 bis 9, dadurch gekennzeichnet, daß als Komponente (C), als Bindemittel Aluminiummonophosphat in wässriger Lösung eingesetzt wird.

11. Formmasse nach einem der Ansprüche 1 bis 10, dadurch gekennzeichnet, daß als Komponente (C) Zement als hydraulisch durch Wasserzusatz härtendes Bindemittel eingesetzt wird.

12. Formmasse nach einem der Ansprüche 1 bis 11, dadurch gekennzeichnet, daß eine Einstellung der Porosität der erhaltenen Formkörper von 0 bis 80 Volumsprozent durch Verwendung von Füllstoffen mit Hohlräumen erfolgt.

13. Formkörper, dadurch gekennzeichnet, daß er zumindest teilweise aus Formmassen entsprechend einem der Ansprüche 1 bis 12 besteht, in Formen eingebracht oder auf Unterlagen aufgetragen wird und je nach Härtungseinstellung der Formmasse bei Raumtemperatur oder bei Temperaturen zwischen 50°C und 300°C, mit oder ohne Anwendung von Druck ausgehärtet wird, wobei im Bedarfsfall eine Trocknungsphase vorgeschaltet werden kann.

14. Formkörper nach Anspruch 13, dadurch gekennzeichnet, daß die Schichtstrukturen der Körper oder Partikel der Komponente (A) überwiegend planparallel angeordnet sind.

15. Verfahren zur Herstellung von Formkörpern nach Anspruch 14, dadurch gekennzeichnet, daß die überwiegend planparallele Orientierung der Plättchen durch schichtweisen Aufbau der Formkörper erzielt wird.

16. Verfahren zur Herstellung von Formkörpern nach Anspruch 15, dadurch gekennzeichnet, daß die planparallele Orientierung der Plättchen in dem schichtweisen Aufbau durch nacheinander erfolgende Streuprozesse oder Streichprozesse durchgeführt wird.

17. Verfahren zur Herstellung von Formkörpern nach Anspruch 16, dadurch gekennzeichnet, daß zwischen den einzelnen Aufträgen in Schichten eine Verfestigung der einzelnen Schichten durch Erwärmen, Trocknen und/oder Pressen und/oder Stampfen erfolgt.

18. Formkörper nach einem der Ansprüche 13, 14 und/oder nach einem Verfahren nach einem der Ansprüche 15 bis 17 hergestellt, dadurch gekennzeichnet, daß die Formkörper Platten sind.

19. Formkörper nach einem der Ansprüche 13, 14 und/oder nach einem Verfahren nach einem der Ansprüche 15 bis 17 hergestellt, dadurch gekennzeichnet, daß bei der Herstellung der Formkörper organische und/oder anorganische Fasern und/oder Gewebe und/oder anderes Verstärkungs- oder Armierungsmaterial, beispielsweise Gitter, als Einlagematerial in die Formmasse verwendet werden.

20. Härtbare Beschichtungen aus überwiegend anorganischen Bestandteilen, dadurch gekennzeichnet, daß die Masse entweder in einer bei Raumtemperatur härtenden oder in einer durch Wärme härtenden Einstellung auf die zu schützende tragende Flächen aufgegossen, aufgespritzt oder in anderer Form fließbar oder in Pulverform mit einer bei erhöhter Temperatur schmelzenden Form aufgetragen wird und es zu einer Aushärtung bei Raumtemperatur mit zunehmender Zeit oder durch einen Erwärmungsprozeß kommt.

## Claims

1. Curable composition of mainly inorganic components characterised in that the composition contains as components
(A) compact bodies or particles of slate and/or slatelike minerals of a thickness normal to the rock layer structure of 0,1 mm to 20 mm and a maximum length of 300 mm and a minimum width of 2 mm, or preferably 3 mm in the layer plane
(B) a preferably cubic, occasionally platelike filler with a maximum particle size of 8 mm, which however contains preferably a portion of over 70 % by weight in the form of a powder of a particle size below 0,3 mm
(C) an inorganic binder, occasionally with a curing substance, with the exception of a binder which has to be melted like glass, and
(D) occasionally an additive and/or auxiliary material of inorganic or organic nature usual for mainly inorganic compositions.

2. A composition according to claim 1 characterised in that the component (A) consists of green slate.

3. A composition according to claim 1 characterised in that the component (A) consists of argillaceous slate.

4. A composition according to the claims 1 to 3 characterised in that the content of component (A) is between 10 % to 90 % by weight of the composition.

5. A composition according to the claims 1 to 4 characterised in that the content of component (B) is between 3 to 75 % by weight (preferably 5 to 40 percent by weight) of the composition.

6. A composition according to the claims 1 to 5 characterised in that the content of component (C) is between 5 and 40 % by weight of the composition.

7. A composition according to one of the claims 1 to 6 characterised in that component (A) is used in form of platelets advantageously with an axial ratio, namely thickness of platelets : length of platelets : width of platelets = 1 : (3-100) : (2-100) and wherein the thickness of the platelets is between 0,1 to 10 mm, preferably 0,5 to 3 mm and the range of the length and the width of the platelets is between 2 mm, preferably 3 mm, and 15 mm.

8. A composition according to one of the claims 1 to 7 characterised in that as component (B) for example powder of quartz, glass-powder, kaolin, magnesite, chalk, slate-powder, bauxite-powder, quartz sand, ashes, slags and/or expanded light-weight fillers like perlite, hyperlite, expanded clay, pumice stone powder, fly ash, etc. is used alone or in combination.

9. A composition according to one of the claims 1 to 8 characterised in that as component (C) an aqueous alkali silicate solution of sodium or potassium water glass with a solid content between 30 and 60%, or a dried alkali silicate in powder form of 80 to 85 % solid content, or an alkali silicate hydrate, or a combination of alkali silicate solution and /or alkali silicate powder and/or alkali silicate hydrate is used.

10. A composition according to one of the claims 1 to 9 characterised in that as component (C), namely as binder monoaluminium phosphate in aqueous solution is used.

11. A composition according to one of the claims 1 to 10 characterised in that as component (C) cement as hydraulically curing binding agent is used.

12. A composition according to one of the claims 1 to 20 characterised in that by addition of fillers comprising hollow spaces the adjustment of the porosity of the obtained formed bodies in the range between 0 to 80 volume percent is performed.

13. A formed body consisting at least partly from one of the compositions described in one of the claims 1 to 12 characterised in, that the composition is filled into moulds or deposited on substrates and, according to the type of adjustment of the curing of the composition, cured at room temperature or at temperatures between 50 °C and 300 °C, with or without the application of pressure, whereby a drying step can be made before curing if necessary.

14. A formed body according to claim 13 characterised in that the layered structures of the bodies or particles of component (A) are mainly oriented in parallel planes.

15. A process for the production of formed bodies according to claim 14 characterised in that the predominant orientation in parallel planes of the platelets is achieved by a stepwise build up of the formed bodies in layers.

16. A process for the production of formed bodies according to claim 15 characterised in that the plane parallel orientation of the platelets in the layered build up is achieved by successive processes of scattering or spreading.

17. A process for the production of formed bodies according to claim 16 characterised in that between the single application steps in layers consolidification of the single layers occurs by increase of temperature, drying and/or pressing and/or tamping.

18. A formed body according to one of the claims 13, 14 and/or produced according to a process to one of the claims 15 to 17 characterised in that the formed bodies are plates.

19. A formed body according to one of the claims 13, 14 and/or produced according to a process according to one of the claims 15 to 17 characterised in that during the process of production of the formed bodies organic and/or inorganic fibers and/or fabrics and/or other types of strengthening or reinforcing materials, like interfacings, as interlining material are used in the composition.

20. Curable coatings made of mainly inorganic components characterised in that the composition is applied in an at room temperature hardening or an at elevated temperature hardening form on the supporting surface to be protected by pouring, spraying or applied in any other flowable form or in powder form in a form melting at elevated temperatures and that the hardening process is performed at room temperature in course of time or by means of a heating process.

## Revendications

1. Composition durcissable en ingrédients pour la plupart inorganiques caractérisée en ce que la composition comprend les composantes suivantes:
(A) corps ou particules compacts en schiste et/ou en roche schisteuse d'une épaisseur à travers le strate de roche de 0,1 mm à 20 mm et d'une longueur de 300 mm au maximum et d'une largeur de 2 mm au minimum, préférablement de 3 mm en plan stratifié
(B) une charge avantageusement cubique, selon le cas en forme de paillettes aux dimensions des particules de 8 mm au maximum, mais cette matière doit préférablement comprendre une portion de matériaux fins de plus de 70% en poids avec un diamètre particulaire sous 0,3 mm
(C) un liant inorganique, à l'exception d'un liant qui doit être fusé comme verre, selon le cas avec un agent durcisseur
(D) éventuellement d'une substance auxiliaire et/ou un additif organique ou inorganique comme d'usage pour compositions prépondérantement inorganiques.

2. Composition selon la revendication 1, caractérisée en ce que composante (A) consiste de schiste vert.

3. Composition selon la revendication 1, caractérisée en ce que composante (A) consiste d'ardoise.

4. Composition selon la revendication 1 à 3, caractérisée en ce que le pourcentage de la composante (A) est de 10 à 90 % en poids de la composition.

5. Composition selon la revendication 1 à 4, caractérisée en ce que le pourcentage de la composante (B) est entre 3 à 75 % en poids (préférablement de 5 à 40 % en poids) de la composition.

6. Composition selon la revendication 1 à 5, caractérisée en ce que le pourcentage de la composante (C) est entre 5 à 40 % en poids de la composition.

7. Composition selon une des revendications 1 à 6, caractérisée en ce que la composante (A) en forme de pailettes, préférablement avec une relation des axes d'épaisseue des pailettes : longueur des pailettes : largeur des pailettes = 1 : (3 - 100) : (2 - 100) est utilisée et l'epaisseur des pailettes y est 0,1 à 10 mm préférablement 0,5 à 3 mm, et la domaine des longueur des pailettes et la largeur des pailettes est entre 2 mm, préférablement 3 mm, et 15 mm.

8. Composition selon une des revendications 1 à 7, caractérisée en ce que en composante (B) poudre de quartz, poudre de verre, caolin, magnésite, craie, poudre de schiste, poudre de bauxite, sable de quartz, cendres, scories et/ou charge léger expansé comme perlite, hyperllite, argile expansée, poudre de ponce, cendres volantes, etc. sont utilisés seuls ou en combination.

9. Composition selon une des revendications 1 à 8, caractérisée en ce que la composante (C) est une solution de silicate d'alkali en eau de silicate de sodium ou de potassium d'un pourcentage sec de 30 à 60 % ou un silicate d'alkali sec en forme de poudre avec un pourcentage sec de 80 à 85 % ou un silicate d'alkali hydraté ou une combinaison d'une solution silicate d'alkali et/ou poudre silicate d'alkali et/ou silicate d'alkali hydraté.

10. Composition selon une des revendications 1 à 9, caractérisée en ce que la composante (C) utilise mono phosphate d'aluminium en solution comme liant.

11. Composition selon une des revendications 1 à 10, caractérisée en ce que la composante (C) utilise du ciment comme liant durcissant hydraulic sous addition d'eau.

12. Composition selon une des revendications 1 à 11, caractérisée en ce que la porosité du objets moulés obtenue est ajustée de 0 à 80 percentage du volume selon l'utilisation de charges aux espaces vides.

13. Objet moulé caractérisée en ce qu'il est composé au moins partiellement d'une composition selon une des revendications 1 à 12, est mis en moulages ou mis sur un support et selon l'ajustage du durcissement de la masse de moulage à température ambiante ou à des températures entre 50 °C et 300 °C avec ou sans pression durcissante, où en cas de besoin une phase de échage est exécutée avant.

14. Objet moulé selon la revendication 13, caractérisé en ce que les structures stratifièes du corps ou particules de la composante (A) sont pour la plupart arrangés sur plan parallèle.

15. Procédé de fabrication du objets moulés selon la revendication 14, caractérisé en ce que l'orientation de la pailettes pour la plupart sur plan parallèle est obtenue par une construction en couches du objets moulés.

16. Procédé de fabrication du objets moulés selon la revendication 15, caractérisé en ce que l'orientation des pailettes plan paralleles dans la construction par couches est réalisée par des procédés successifs de jeter ou de racler.

17. Procédé de fabrication du objets moulés selon la revendication 16, caractérisé en ce qu'un fixage des couches individuelles se fait entre les applications individuelles par couches par échauffement, séchage et/ou pressage et/ou serrage.

18. Objets moulés fabriqués selon une des revendications 13, 14 et/ou selon un procédé selon une des revendications 15 à 17, caractérisés en ce que les objets moulés sont des plaques.

19. Objets moulés fabriqués selon une des revendications 13, 14 et/ou selon un procédé selon une des revendications 15 à 17, sont caractérisés en ce que des fibres organiques et/ou inorganiques et/ou des tissus et/ou d'autres matériaux de renforcement ou armature, par exemple un treillis de renfort, sont utilisés comme matériaux d'entoilage dans la composition.

20. Revêtements durcissables en ingrédients pour la plupart inorganiques, caractérisé en ce que la composition est appliquée sur la plaine portante à protéger soit à un ajustage à température ambiante durcissable soit à un ajustage à chaleur durcissable la masse y est renversée, projetée ou appliquée dans un autre forme coulante ou en forme de poudre dans une forme fusante à une témpérature élevée et un durcissement à temperature ambiante avec le temps ou sous une opération d'échauffement a lieu.
